# FASCICULE DE BREVET EUROPEEN

(11) **EP 0 715 032 B1**
(45) Date de publication et mention de la délivrance du brevet: **30.09.1998**
(21) Numéro de dépôt: 95402594.6
(22) Date de dépôt: 17.11.1995
(51) Int. Cl.: E02F 9/28, A01B 33/10

(54) **Dispositif de montage d'outils pour un rotor d'une machine**
Werkzeuganbauvorrichtung für ein Maschinen-Schneidrad
Tool mounting device for rotor of a machine

(30) Priorité: 30.11.1994 FR 9414404
(43) Date de publication de la demande: 05.06.1996
(73) Titulaire: Draghi, Umberto, 1170 Bruxelles (BE)
(72) Inventeur: Draghi, Umberto, 1170 Bruxelles (BE)
(74) Mandataire: Michelet, Alain

(56) Documents cités:
- WO-A-80/00088
- FR-A- 2 386 649
- GB-A- 897 280
- GB-A- 2 113 177
- US-A- 4 360 068

## Description

L'invention concerne un dispositif de montage d'outils pour un rotor d'une machine destinée à couper un sol ainsi qu'un rotor comprenant un tel dispositif.

Les applications principales des dispositifs de montage d'outils sont les machines utilisées pour la stabilisation de sols et pour le recyclage de sols.

La stabilisation de sols a pour objectif de transformer, grâce à des additifs, des sols imparfaits en une infrastructure résistante. Pour cela, la couche supérieure du sol à stabiliser est enlevé jusqu'à une profondeur pré-établie, les matériaux la composant sont introduits dans un malaxeur dans lequel sont également introduits les additifs et, après malaxage, redéposé sur la surface d'origine.

Les sols à stabiliser peuvent être de natures très variées, par exemple argileux ou sablonneux, et contenir un pourcentage variable de pierres et autres objets durs.

Selon la technique actuellement pratiquée pour la stabilisation des sols, on utilise des machines, appelées stabilisatrices, qui réunissent en une seule machine toutes les fonctions énoncées ci-avant, à savoir couper la couche supérieure du sol jusqu'à une profondeur pré-établie, enlever les matériaux coupés pour les introduire dans un malaxeur, introduire des additifs dans le malaxeur, malaxer le mélange et redéposer le mélange résultant sur la surface initiale.

La coupe du sol est effectuée par un rotor comprenant une pluralité de disques montés sur un même axe, une distance axiale déterminée sépare chaque disque de ses voisins. Chaque disque est muni d'au moins un outil de forme générale oblongue, destiné à être enfoncé dans le sol pour effectuer la coupe.

L'outil a en général la forme d'une dent ou d'un pic et est soudé sur la périphérie du disque. En conséquence, le remplacement d'un outil implique un arrêt d'utilisation de la machine assez important et nécessite un appareillage relativement lourd pour pouvoir assurer une bonne qualité de la soudure.

Compte-tenu de l'usure importante que ces outils subissent, ceci constitue un désavantage important.

Par ailleurs, les machines utilisées jusqu'ici sont limitées à l'utilisation initialement prévue, par exemple à la stabilisation de sols. Un changement d'utilisation de la machine, par exemple son utilisation comme machine à recycler le sol, nécessite donc de procéder à un remplacement complet du rotor ou à un remplacement un par un des outils, ce qui est dans un cas comme dans l'autre, une opération longue et coûteuse.

Le document US-A-4.360.068 qui est considéré comme l'état de la technique le plus proche décrit un disque portant, à sa périphérie, une pluralité d'outils permettant de produire un sillon dans un sol meuble, tel un champ. Le disque est muni, à chaque zone de fixation d'un outil, d'un épaulement présentant une phase approximativement perpendiculaire à la direction d'enfoncement de l'outil dans le sol. Chaque outil comprend une partie au moins partiellement cylindrique dont l'une ou l'autre de ses extrémités est munie d'une pointe dure, ainsi que d'une partie d'attache présentant une fente disposée dans un plan parallèle à celui dans lequel s'étend l'axe longitudinal de la partie cylindrique. L'outil est attaché au disque au moyen de deux boulons. Aucune application en dehors de celle dans un sol meuble n'est décrit.

Le problème est de protéger la fixation (boulons, vis, écrous...) contre les attaques du sol.

Le document GB-A-2.113.177 décrit un outil pour le rotor d'une machine à travailler le sol et plus particulièrement d'une machine à stabiliser un sol. L'outil est relié au rotor moyennant un porte-outil. Le porte-outil comprend une partie tubulaire dans laquelle l'outil est emmanché, ainsi qu'un bloc de fixation permettant de fixer le porte-outil sur le rotor par soudage. La forme du rotor dans les zones de fixation des porte-outils n'est pas précisée.

Le document WO-A-80/00088 décrit un outil de pelle d'une machine de terrassement. L'outil est attaché à la pelle au moyen d'un porte-outil constitué par un bloc massif de section approximativement triangulaire. Alors que l'outil est attaché au porte-outil du côté de la pointe de ce dernier au moyen d'une goupille, le porte-outil lui-même est attaché du côté opposé à la pointe, sur la pelle au moyen d'un boulon. Le porte-outil présente dans la zone destinée à recevoir respectivement la tête de vis et l'écrou du boulon, des excavations destinées à protéger les extrémités du boulon.

Le document GB-A-897.280 décrit un outil pour des machines d'excavation des minéraux et de sol, et montre plus particulièrement la fixation de l'outil sur la pelle au moyen d'un porte-outil. Le porte-outil lui-même est attaché à la pelle par des boulons ou des rivets. L'outil peut également être emmanché dans le porte-outil et fixé au moyen d'une goupille.

Le document FR-A-2.386.649 décrit un outil pour une machine de terrassement destinée à travailler dans un terrain très meuble. Plus particulièrement, ce document montre un rotor constitué d'une pluralité de disques dont chacun est muni d'une pluralité d'outils. Les dispositifs de montage sont orientés angulairement de manière à définir un angle de décalage entre les directions d'enfoncement des outils correspondants de deux disques voisins.

Le but de l'invention est de remédier aux inconvénients du dispositif et machine utilisés jusqu'ici et de proposer un dispositif de montage d'outils protégeant la fixation de l'outil par vis ou écrou contre les attaques du sol.

Le but doit être atteint par les caractéristiques de la partie caractérisante de la revendication 1.

Des réalisations particulières sont décrites par les revendications dépendantes 2-6.
- le porte-outil est attaché au disque par deux boulons;
- le rebord protégeant les deux boulons comporte une première partie s'étendant entre les orifices prévus pour les deux boulons et une deuxième partie orientée sensiblement perpendiculairement à l'étendue longitudinale de la partie tubulaire;
- le porte-outil comprend deux pattes de fixation s'étendant parallèlement l'une à l'autre et espacées de façon à pouvoir recevoir entre elles, le disque;
- la tige de l'outil, destinée à être emmanchée dans la partie tubulaire du porte-outil, est fixée par une goupille;
- l'outil est une dent comportant une pale dont la face d'attaque présente un profil de deux socs disposés symétriquement dos à dos;
- l'outil est un pic comportant une pointe destinée à arracher le sol.

Le but de l'invention est également atteint par un rotor d'une machine destinée à couper le sol, comportant une pluralité de dispositifs de montage d'outils, du genre décrit ci-avant, disposé sur un même axe et à une distance axiale l'un de l'autre, le disque étant orienté angulairement de manière à définir un angle de décalage entre les axes longitudinaux, ou directions d'enfoncement dans le sol, des outils correspondants de deux disques voisins.

D'autres caractéristiques et avantages de l'invention ressortiront à la lecture de la description d'un exemple de réalisation en référence aux dessins, dans lesquels:

La Figure 1 montre un dispositif de montage en une vue éclatée.

La Figure 2 montre le dispositif de montage de la Figure 1 dans son état assemblé.

La Figure 3 montre un rotor d'une stabilisatrice comportant une pluralité de dispositifs représentés sur la Figure 2, et

La Figure 4 montre une partie du rotor de la Figure 3 en une vue axiale.

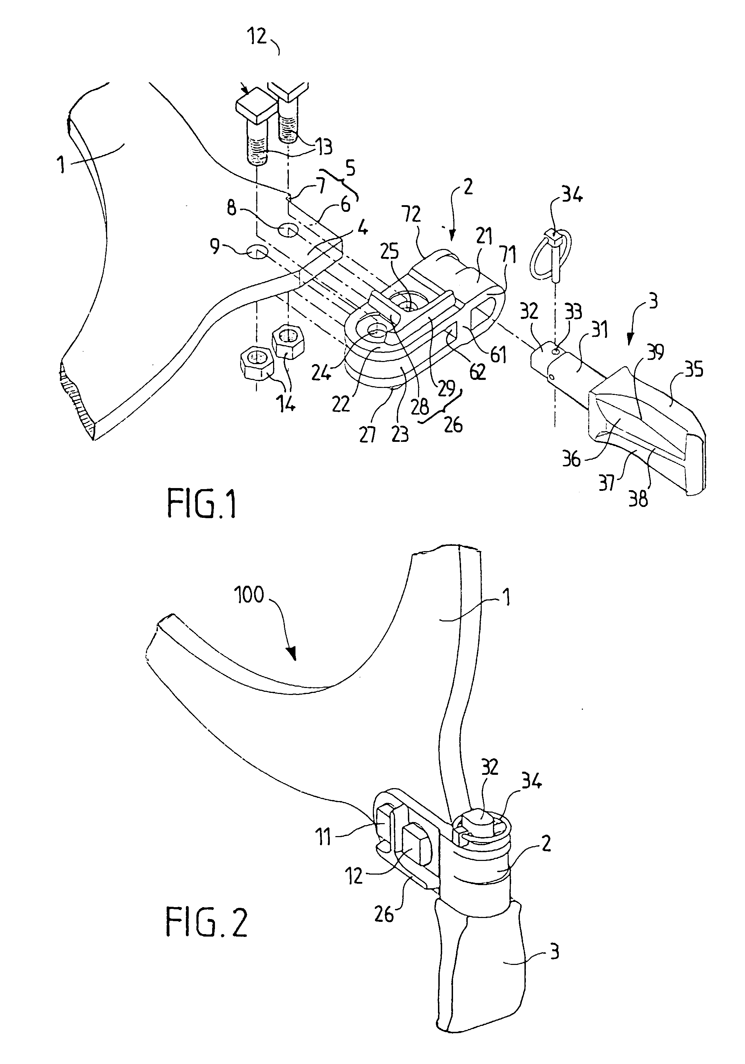

Le dispositif de montage d'outils comporte un disque 1 dont la Figure 1 ne montre qu'un secteur, un porte-outil 2 et un outil 3.

Le disque 1 peut être formé en une seule pièce ou constitué d'une pluralité de secteurs montés individuellement sur l'axe d'un rotor d'une machine destinée à la stabilisation ou au recyclage de sols. Lorsque le disque est constitué d'une pluralité de secteurs, le nombre de secteurs correspond au nombre d'outils fixés sur chaque disque du rotor.

Le disque 1 présente à sa périphérie, au droit de fixation d'un outil 3 au moyen d'un porte-outil 2, une partie sensiblement rectangulaire 4 formant avec le pourtour du disque 1 un épaulement 5 constituant deux faces d'appui 6, 7 pour le porte-outil 2. Alors que la face 7 est approximativement perpendiculaire à la direction d'enfoncement de l'outil dans le sol, la face d'appui 6 est orientée perpendiculairement à la face 7. L'orientation de la face 7 permet la transmission des forces de réaction agissant sur l'outil 3 lors de son enfoncement dans le sol, au disque 1 sans risque de surcharge des moyens de fixation amovibles par lesquels le porte-outil 2 est fixé sur le disque 1.

L'outil 3 est généralement symétrique par rapport à un plan, et un axe compris dans ce plan définit la direction de la plus grande composante des efforts transmis par l'outil 3 au disque 1. Cet axe est la direction d'enfoncement de l'outil.

Le disque 1 est muni au droit de fixation du porte-outil 2 de deux orifices 8, 9 destinés à recevoir deux boulons 11, 12 qui traversent à la fois le porte-outil 2 et le disque 1 lorsque le dispositif de montage d'outil est assemblé.

Les boulons 11, 12 sont identiques l'un à l'autre et comprennent une vis 13 à tête carrée et un écrou frein 14.

Le porte-outil 2 est une pièce en fonte comprenant une première partie tubulaire 21 destinée à recevoir l'outil 3, et de pattes de fixation 22, 23 situées sur le même côté de la partie tubulaire 21 et s'étendant parallèlement l'une à l'autre avec lequel un espace entre elles dans lequel peut entrer le disque 1. Les pattes de fixation 22, 23 présentent chacune deux orifices 24, 25 par lesquels passent les boulons 11, 12 lorsque le dispositif de montage d'outils est assemblé.

Les pattes de fixation 22, 23 présentent par ailleurs, sur les faces extérieures du porte-outil 2, des rebords 26, 27 dont chacun est constitué d'une première partie 28 et d'une deuxième partie 29. La première partie 28 du rebord 26 est disposée entre les deux orifices 24, 25 et orientée approximativement parallèlement à l'étendue longitudinale de la partie tubulaire 21 du porte-outil 2. La deuxième partie 29 du rebord 26 est disposée perpendiculairement par rapport à la première partie 28 et s'étend à partir de la partie tubulaire 21 sur une longueur correspondant au moins à l'emplacement des deux orifices 24, 25. De préférence, la deuxième partie 29 du rebord 26 est suffisamment longue pour constituer un écran de protection pour les deux têtes de vis des vis 13 contre le matériau que le porte-outil 2 rencontre lors de la pénétration de l'outil 3 dans le sol à stabiliser ou à recycler.

La partie tubulaire 21 du porte-outil 2 comprend une section 61 sur laquelle sont formées les pattes de fixation 22, 23 et qui présente une face approximativement plane 62 s'étendant entre les pattes de fixation 22, 23 et destinées à s'appuyer sur la face d'appui 6 de l'épaulement 5 du disque 1 lorsque le dispositif de montage d'outils est assemblé. De plus, la partie tubulaire 21 présente, à ses extrémités, des faces 71, 72. Alors que la face 71 présente une face d'appui pour l'outil 3, la face 72 est destinée à être en regard à la face d'appui 7 de l'épaulement 5 du disque 1 et de prendre appui sur celle-ci lorsque le dispositif de montage d'outils est assemblé.

L'outil 3 comporte une tige 31 dans laquelle est pratiquée, vers son extrémité libre 32, un orifice 33 destiné à recevoir une goupille 34 lorsque l'outil 3 est emmanché dans la partie tubulaire 21 du porte-outil 2. L'outil 3 comporte également une pale 35 donnant à l'outil 3 la forme d'une dent. La pale 35 présente sur la face attaquant le sol lors de l'utilisation de la machine dans laquelle le dispositif de montage d'outils est installé, deux profils 36, 37 symétriquement disposés et séparés par une paroi centrale 38. Les profils 36, 37 sont représentés sur la Figure 1 comme ayant sensiblement deux faces délimitées par une ligne de plis 39, la paroi 38 présentant une section transversale approximativement trapézoïdale. Toutefois, les profils 36, 37 peuvent être formés de manière courbe sans ligne de plis, présentant ainsi l'aspect de deux socs disposés symétriquement dos à dos. Le fait de munir la pale 35 de deux profils symétriques 36, 37 donne à l'outil 3 dans l'un et l'autre des deux modes de réalisation du profil 36, 37 l'avantage d'un déversement amélioré du matériau coupé du sol.

La Figure 2 montre le dispositif de montage d'outils 100 de l'invention dans son état assemblé. On y voit plus particulièrement le disque 1, le porte-outil 2 fixé sur le disque 1 par les boulons 11, 12, et la dent 3 mise en place par emmanchement dans le porte-outil 2, de manière à ce que la goupille 34 puisse être insérée dans l'extrémité 32 de la tige 31 de la dent 3.

Le dispositif de montage d'outils est représenté sur la Figure 2 dans sa position de travail. Ainsi, la direction d'enfoncement de l'outil dans le sol est orientée vers le bas de la Figure. En conséquence, le matériau coupé du sol effectue un mouvement relatif vertical vers le haut, lors de l'enfoncement de l'outil 3 dans le sol. On peut apprécier ainsi la protection que confère le rebord 26 aux têtes de vis des boulons 11 et 12 lors de l'utilisation du rotor muni du dispositif de montage d'outils.

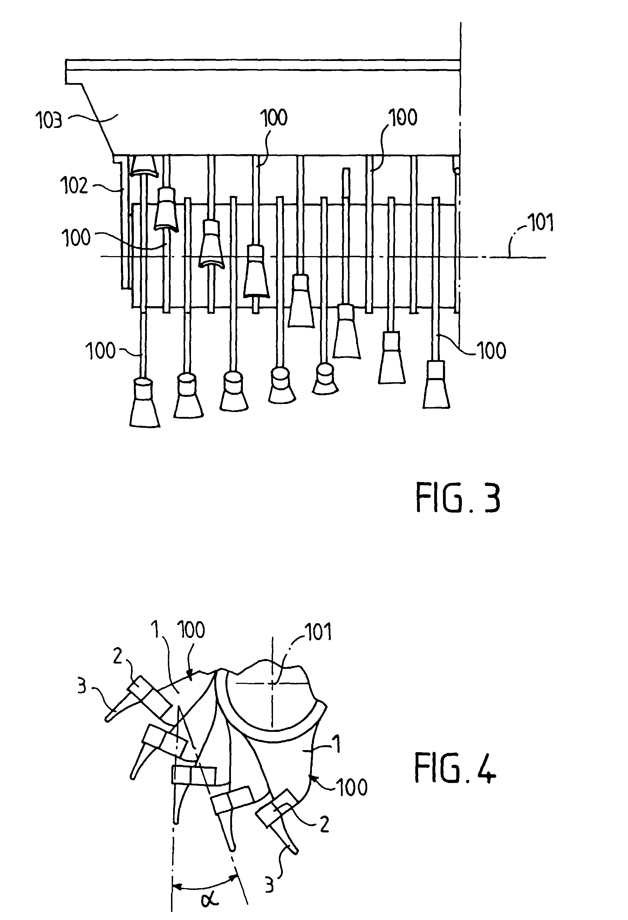

La Figure 3 montre une partie d'un rotor d'une machine destinée à couper un sol. Le rotor comprend une pluralité de dispositifs de montage d'outils 100 montés sur un même axe 101 et espacés axialement l'un par rapport à l'autre. Le rotor est monté mobile en rotation aux extrémités de son axe 101 dans des bras 102 reliés à un châssis 103.

Pour permettre un fonctionnement optimal du rotor, les dispositifs de montage d'outils 100 sont disposés sur l'axe 101 avec différentes orientations angulaires des outils 3. En effet, les dispositifs de montage d'outils 100 sont orientés angulairement de manière à définir un angle α entre les directions d'enfoncement des outils 3 correspondants de deux dispositifs voisins 100. Cette disposition de décalage angulaire des dispositifs de montage 100 est représentée en une vue axiale du rotor sur la Figure 4.

Ainsi, le dispositif de montage d'outils peut supporter sans détérioration les efforts de travail importants exercés lors de sa pénétration dans le sol. Il est protégé des effets produits par des chocs latéraux. Les performances de la machine ne sont donc pas affectées par l'introduction de ce dispositif qui est d'un usage simple et permet un remplacement ainsi des outils soit lorsque cela est nécessaire en raison de leur usure ou de leur détérioration, soit pour changer l'usage de la machine.

Les signes de référence insérés après les caractéristiques techniques mentionnées dans les revendications, ont pour seul but de faciliter la compréhension de ces dernières, et n'en limitent aucunement la portée.

## Revendications

1. Dispositif de montage d'outils (100) pour un rotor d'une machine destinée à couper un sol, comportant au moins un outil (3) de forme générale oblongue, destiné à être enfoncé dans le sol, attaché à un disque (1) au moyen d'un porte-outil (2), ledit outil s'étendant essentiellement dans le plan du disque, le porte-outil (2) étant attaché au disque par au moins un boulon (11, 12), le disque (1) comportant à sa périphérie pour chaque outil, un épaulement (5) constituant deux faces d'appui (6, 7) pour le porte-outil (2), dont l'une (7) est approximativement perpendiculaire à la direction d'enfoncement de l'outil (3) dans le sol, le porte-outil (2) comportant une première partie tubulaire (21) destinée à recevoir, par emmanchement, une tige (31) de l'outil (3) et une deuxième partie formée par au moins une patte (22, 23) de fixation ayant au moins un orifice (24, 25) destiné à recevoir le boulon (11, 12),
caractérisé en ce que la première partie (21) du porte-outil (2) est tubulaire et en ce que chaque patte de fixation (22, 23) est munie, sur la face opposée au disque lorsque le porte-outil y est attaché, d'un rebord (26) destiné à protéger respectivement la tête de vis ou l'écrou du boulon (11, 12) contre les attaques du sol lors de la pénétration de l'outil dans ce dernier.

2. Dispositif de montage d'outil (100) selon la revendication 1, caractérisé en ce que le porte-outil (2) est attaché au disque (1) par deux boulons (11, 12), et en ce que le rebord (26) protégeant les deux boulons comporte une première partie (26) s'étendant entre les orifices (24, 25) prévus pour les deux boulons (11, 12) et une deuxième partie orientée sensiblement perpendiculairement à l'étendue longitudinale de la partie tubulaire (21).

3. Dispositif de montage d'outil (100) selon l'une des revendications 1 ou 2, caractérisé en ce que le porte-outil (2) comprend deux pattes (22, 23) de fixation s'étendant parallèlement l'une à l'autre et espacées de façon à pouvoir recevoir entre elles le disque (1).

4. Dispositif de montage d'outil (100), selon l'une des revendications 1 à 3, caractérisé en ce que la tige (31) destinée à être emmanchée dans la partie tubulaire (21) du porte-outil est fixée par une goupille (34).

5. Dispositif de montage d'outil (100) selon l'une des revendications 1 à 4, caractérisé en ce que l'outil (3) est une dent comprenant une pale (35) dont la face d'attaque est munie d'un profil de socs disposés symétriquement dos à dos.

6. Dispositif de montage d'outil (100) selon l'une des revendications 1 à 4, caractérisé en ce que l'outil (3) est un pic comprenant une pointe destinée à arracher le sol.

7. Rotor d'une stabilisatrice de sol comportant une pluralité de dispositifs de montage d'outil (100) selon l'une des revendications 1 à 6, disposés sur un même axe (101) et à une distance axiale l'un de l'autre, les dispositifs de montage (100) étant orientés angulairement de manière à définir un angle de décalage (α) entre les directions d'enfoncements des outils (3) correspondants de deux disques voisins.

## Patentansprüche

1. Vorrichtung zur Montage von Werkzeugen (100) für einen Rotor einer Maschine, die dazu bestimmt ist, einen Boden zu schneiden, wobei die Vorrichtung mindestens ein Werkzeug (3) von allgemein länglicher Form aufweist, das dazu bestimmt ist, in den Boden eingestoßen zu werden und welches an einer Platte (1) mittels eines Werkzeughalters (2) befestigt ist, wobei sich das Werkzeug im wesentlichen in der Ebene der Platte erstreckt, der Werkzeughalter (2) an der Platte durch mindestens eine Durchsteckschraube (11, 12) befestigt ist, und die Platte (1) an ihrem Umfang für jedes Werkzeug eine Schulter (5) aufweist, welche zwei Stützflächen (6, 7) für den Werkzeughalter (2) bildet, von denen die eine (7) sich annähernd senkrecht zu der Einstoßrichtung des Werkzeugs (3) in den Boden befindet, wobei der Werkzeughalter (2) einen ersten rohrförmigen Teil (21) aufweist, der dazu bestimmt ist, durch Einstecken eine Stange (31) des Werkzeuges (3) aufzunehmen, und einen zweiten Teil aufweist, der durch mindestens eine Befestigungsklemme (22, 23) gebildet ist, die mindestens eine Öffnung (24, 25) hat, die dazu bestimmt ist, die Durchsteckschraube (11, 12) aufzunehmen, **dadurch gekennzeichnet,** daß der erste Teil (21) des Werkzeughalters (2) rohrförmig ist und daß jede Befestigungsklemme (22, 23) an der der Platte entgegengesetzten Seite, wenn der Werkzeughalter dort befestigt ist, mit einer Randleiste (26) versehen ist, die dazu bestimmt ist, den Schraubenkopf bzw. die Mutter der Durchsteckschraube (11, 12) gegen Angriffe des Bodens während des Eindringens des Werkzeuges in letzteren zu schützen.

2. Vorrichtung zur Werkzeugmontage (100) nach Anspruch 1, dadurch gekennzeichnet, daß der Werkzeugträger (2) an der Platte (1) durch zwei Durchsteckschrauben (11, 12) befestigt ist und daß die Randleiste (26), welche die zwei Durchsteckschrauben schützt, einen ersten Teil (26) aufweist, der sich zwischen den Öffnungen (24, 25) erstreckt, die für die zwei Durchsteckschrauben (11, 12) vorgesehen sind und einen zweiten Teil aufweist, der im wesentlichen senkrecht zur Längsausdehnung des rohrförmigen Teils (21) ausgerichtet ist.

3. Vorrichtung zur Werkzeugmontage (100) nach einem der Ansprüche 1 oder 2, dadurch gekennzeichnet, daß der Werkzeughalter (2) zwei Befestigungsklemmen (22, 23) aufweist, die sich parallel zueinander erstrecken und derart im Abstand gehalten sind, daß sie zwischen sich die Platte (1) aufnehmen können.

4. Vorrichtung zur Werkzeugmontage (100) nach einem der Ansprüche 1 bis 3, dadurch gekennzeichnet, daß die Stange (31), die dazu bestimmt ist, in den rohrförmigen Teil (21) des Werkzeughalters eingesteckt zu werden, durch einen Vorsteckstift (34) befestigt ist.

5. Vorrichtung zur Werkzeugmontage (100) nach einem der Ansprüche 1 bis 4, dadurch gekennzeichnet, daß das Werkzeug (3) ein Zahn ist, der eine Schaufel (35) aufweist, deren Angriffsfläche mit einem Profil von Pflugschaufeln versehen ist, die symmetrisch Rücken an Rücken angeordnet sind.

6. Vorrichtung zur Werkzeugmontage (100) nach einem der Ansprüche 1 bis 4, dadurch gekennzeichnet, daß das Werkzeug (3) eine Hacke ist, die eine Spitze aufweist, welche dazu bestimmt ist, den Boden aufzureißen.

7. Rotor einer Bodenstabilisierungsvorrichtung mit einer Vielzahl von Vorrichtungen zur Werkzeugmontage (100) nach einem der Ansprüche 1 bis 6, die auf einer selben Achse (101) und in einem axialen Abstand zueinander angeordnet sind, wobei die Montagevorrichtungen (100) winkelig derart ausgerichtet sind, daß sie einen Verschiebungswinkel (α) zwischen den Einstoßrichtungen der entsprechenden Werkzeuge (3) zweier benachbarter Platten bilden.

## Claims

1. Device for mounting tools (100) for a rotor of a machine intended to cut the ground, including at least one tool (3) of oblong overall shape intended to be dug into the ground, attached to a disc (1) by means of a tool holder (2), the said tool stretching essentially in the plane of the disc, the tool holder (2) being attached to the disc by at least one bolt (11,12), the disc (1) including at its periphery, for each tool, a shoulder (5) constituting two bearing faces (6,7) for the tool holder (2), of which faces one (7) is approximately perpendicular to the direction in which the tool (3) is dug into the ground, the tool holder (2) including a first tubular part (21) designed to receive, by interfitting, a rod (31) of the tool (3) and a second part formed by at least one fixing lug (22,23) having at least one orifice (24, 25) designed to take the bolt (11,12),
characterized in that the first part (21) of the tool holder (2) is tubular and in that each fixing lug (22, 23) is equipped, on its face opposite the disc when the tool holder is attached to it, with a lip (26) designed to protect the screw head or the nut of the bolt (11,12) respectively against aggression from the ground as the tool penetrates the latter.

2. Device for mounting a tool (100) according to Claim 1, characterized in that the tool holder (2) is attached to the disc (1) by two bolts (11,12) and in that the lip (26) protecting the two bolts has a first part (26) stretching between the orifices (24,25) provided for the two bolts (11,12) and a second part orientated substantially perpendicular to the longitudinal stretch of the tubular part (21).

3. Device for mounting a tool (100) according to one of Claims 1 and 2, characterized in that the tool holder (2) comprises two fixing lugs (22,23) stretching parallel to one another and spaced apart so that they can take the disc (1) between them.

4. Device for mounting a tool (100) according to one of Claims 1 to 3, characterized in that the rod (31) intended to be fitted into the tubular part (21) of the tool holder is fixed by a pin (34).

5. Device for mounting a tool (100) according to one of Claims 1 to 4, characterized in that the tool (3) is a tooth comprising a blade (35), the leading face of which has a profile of ploughbottoms arranged symmetrically back to back.

6. Device for mounting a tool (100) according to one of Claims 1 to 4, characterized in that the tool (3) is a pick comprising a spike intended to tear at the ground.

7. Rotor of a ground-stabilizing machine comprising a plurality of tool-mounting devices (100) according to one of Claims 1 to 6, arranged on one and the same axis (101) and at an axial distance apart, the mounting devices (100) being orientated angularly so as to define an off-set angle (α) between the directions in which the corresponding tools (3) of two neighbouring discs dig.
